# EUROPÄISCHE PATENTSCHRIFT

(11) **EP 0 752 580 B1**
(45) Veröffentlichungstag und Bekanntmachung des Hinweises auf die Patenterteilung: **15.09.1999**
(21) Anmeldenummer: 96110634.1
(22) Anmeldetag: 02.07.1996
(51) Int. Cl.: G01L 23/22, F02P 17/12, F02D 41/14

(54) **Schaltungsanordnung zur Ionenstrommessung**
Measuring circuit for an ionic current
Circuit de mesure pour courant ionique

(30) Priorität: 05.07.1995 DE 19524541
(43) Veröffentlichungstag der Anmeldung: 08.01.1997
(73) Patentinhaber: TEMIC TELEFUNKEN microelectronic GmbH, 74072 Heilbronn (DE); DaimlerChrysler AG, 70567 Stuttgart (DE)
(72) Erfinder: Hohner, Peter, 70771 Echterdingen (DE); Jens Schirmer, 90542 Eckental (DE)
(74) Vertreter: Maute, Hans-Jürgen, Dipl.-Ing.

(56) Entgegenhaltungen:
- EP-A- 0 546 827
- EP-A- 0 652 363
- EP-A- 0 654 604
- DE-A- 2 455 536
- DE-A- 3 327 766
- FR-A- 2 676 506

## Beschreibung

Die Erfindung betrifft eine Schaltungsanordnung zur Ionenstrommessung gemäß dem Oberbegriff des Patentanspruches 1 bzw. 2.

Eine solche Schaltungsanordnung ist aus der DE 33 27 766 A1 bekannt, die zur Klopferkennung an einer Brennkraftmaschine dient, bei der im Brennraum jedes Zylinders eine gleichzeitig als Ionenstromsonde dienende Zündkerze angeordnet ist. Um ein Meßsignal für den Ionenstrom zu erhalten, wird auf der Primärseite der Zündspule eine Wechselspannung erzeugt, die sekundärseitig zu einem Meßsignal des Ionenstromes führt, dem dessen Schwankungen aufmoduliert sind. Dieses amplitudenmodulierte sekundärseitige WechselspannungsSignal wird sekundärseitig ausgekoppelt und in einer Auswerteschaltung bearbeitet.

Diese bekannte Schaltungsanordnung umfaßt eine Transistorzündung, wobei zur Erzeugung des primärseitigen Wechselspannungssignal ein Hochfrequenzgenerator dient, dessen impulsförmige Ausgangssignale der Steuerelektrode des Zündtransistors zugeführt werden.

Der Nachteil dieser bekannten Schaltung besteht darin, daß sowohl zur Erzeugung des primärseitigen Wechselspannungssignals als auch zur Auswertung des sekundärseitig erzeugten modulierten Wechselspannungssignales eine erhebliche Anzahl von Bauelementen erforderlich ist. Neben dem Hochfrequenzgenerator sind desweiteren für die Auswertung des sekundärseitigen Meßsignales ein Demodulator sowie mehrere Filteranordnungen erforderlich.

Der Erfindung liegt daher die Aufgabe zugrunde, eine Schaltungsanordnung der eingangs genannten Art anzugeben, die gegenüber der bekannten Schaltungsanordnung zur Ionenstrommessung einen einfacheren Aufbau aufweist.

Diese Aufgabe wird bei einer Schaltungsanordnung der eingangs genannten Art gemäß den kennzeichnenden Merkmalen der Patentansprüche 1 und 2 gelöst, wonach die Zündspule zur Erzeugung eines sekundärseitigen quasi-stationären Meßsignales mit einem sägezahnförmigen Stromsignal als Primärstrom angesteuert wird bzw. das Stromsignal einen dreiecksförmigen Verlauf über eine Periode darstellt. Somit ist gegenüber dem Stand der Technik kein Hochfrequenzgenerator notwendig, noch sind für die Generierung des Ionenstromsignales ein Demodulator oder Filteranordnungen erforderlich.

Gemäß einer vorteilhaften Weiterbildung der Erfindung wird bei Einsatz einer Zündspule mit Primär- und Sekundärwicklung das sekundärseitige Meßsignal mittels einer im Sekundärkreis der Zündspule angeordneten Meßanordnung ausgekoppelt.

Bei einer besonders vorteilhaften Weiterbildung der Erfindung ist die Zündspule als Spartransformator ausgebildet, so daß das Meßsignal des Ionenstromes direkt auf der Primärseite der Zündspule abgreifbar ist.

Im folgenden soll die Erfindung anhand von Ausführungsbeispielen im Zusammenhang mit den Zeichnungen dargestellt und erläutert werden.

Es zeigen:
Figur 1, ein Blockschaltbild einer Transistorzündung gemäß einem Ausführungsbeispiel der Erfindung,
Figur 2 ein Blockschaltbild eines weiteren Ausführungsbeispieles mit einer als Spartransformator ausgebildeteten Zündspule,
Figuren 3a und 4a Strom-Zeitdiagramme mit den der Zündspule primärseitig zugeführten Stromsignalen und
Figuren 3b und 4b Spannungs-Zeitdiagramme der auf der Sekundärseite der Zündspule erzeugten Spannungssignale.

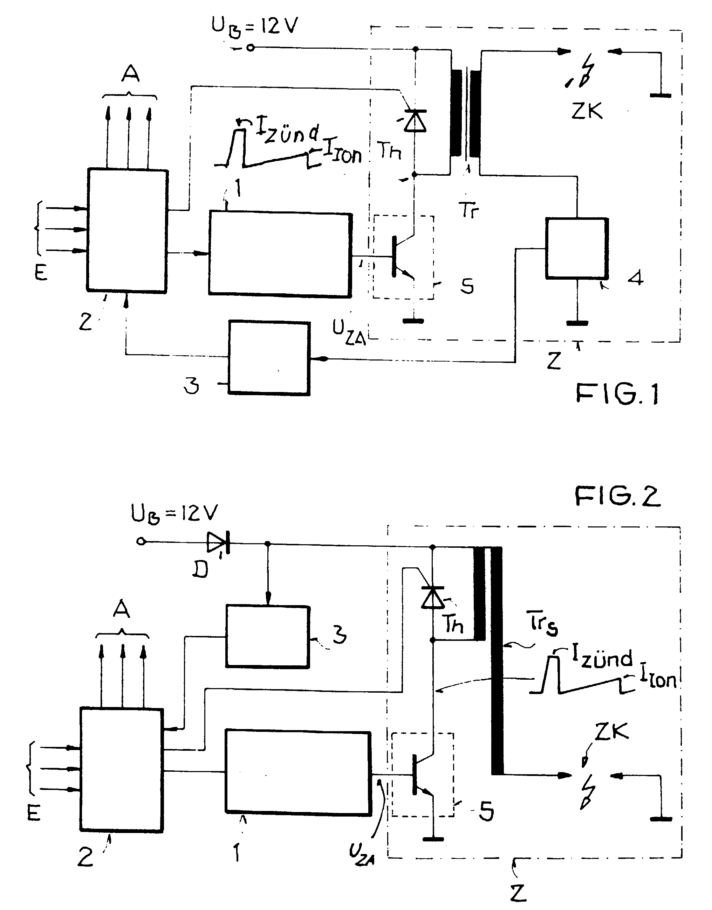

Obwohl die in den Figuren 1 und 2 dargestellten Transistorzündungen für Mehrzylinder-Brennkraftmaschinen geeignet sind, ist der Einfachheit halber jeweils nur eine Zündendstufe Z mit einer Zündkerze Zk gezeichnet.

Die Zündendstufe Z gemäß Figur 1 umfaßt eine Zündspule Tr mit einer Primär- und einer Sekundärwicklung, wobei an die Sekundärwicklung die schon genannte Zündkerze Zk angeschlossen ist. Die Primärwicklung ist mit ihrem einen Anschluß mit einer von der Bordbatterie eines Fahrzeuges abgegebenen Betriebsspannung U_{B} von 12 V verbunden und mit ihrem anderen Anschluß an einen Zündtransistor 5 angeschlossen. Ferner kann die Primärwicklung mittels eines Thyristors Th kurzgeschlossen werden, dessen Funktion weiter unten beschrieben wird.

Ein Steuergerät 2 übernimmt die Funktion eines Motormanagements und ist mit einer Regelschaltung 1 verbunden, um über eine entsprechende Verbindungsleitung für eine korrekte Zündverteilung zu sorgen. Hierzu werden dieser Steuereinheit 2 über einen Eingang E Motorparameter, wie Last, Drehzahl und Temperatur zugeführt. Entsprechende Aktuatoren werden über Ausgänge A gesteuert.

Die Regelschaltung 1 erzeugt die von der Steuereinheit 2 ausgelösten Zündauslöseimpulse U_{ZA}, die der Steuerelektrode des Zündtransistors 5 zugeführt werden, um hierdurch den Zündvorgang an der Zündkerze Zk einzuleiten.

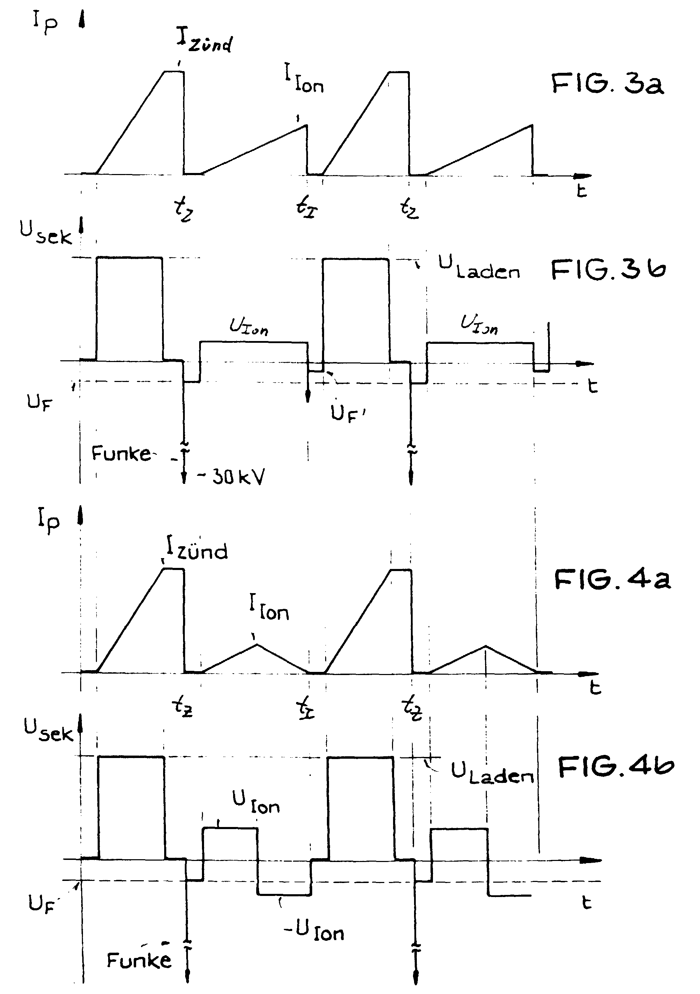

Ein solcher Zündauslöseimpuls U_{ZA} führt gemäß Figur 3a primärseitig zu einem ansteigenden Zündstrom I_{Zünd}, der im Zündzeitpunkt t_{Z} abgeschaltet wird. Den entsprechenden sekundärseitigen Spannungsverlauf Uₛₑₖ zeigt das Diagramm nach Figur 3b, wobei die Ladespannung U_{Laden} durch die Anstiegsgeschwindigkeit des Zündstromes I_{Zünd} gemäß dI_{Zünd}/dt bestimmt ist.

Im Zündzeitpunkt t_{Z} entsteht ein Zündfunke von ca. 30 kV, der während einer bestimmten Brenndauer bei einer Brennspannung U_{F} einen Funkenbrennstrom erzeugt.

Anschließend wird auf der Primärseite des Zündtrafos ein sägezahnförmiges Stromsignal I_{Ion} gemäß Figur 3a oder ein dreieckförmiges Stromsignal I_{Ion} gemäß Figur 4a erzeugt, das gemäß Figur 3b bzw. Figur 4b sekundärseitig zu einem in Abhängigkeit des Ionisationsgrades modulierten Gleichspannungs- bzw. Wechselspannungssignal U_{Ion} führt.

Um im erstgenannten Fall (siehe Fig. 3a und 3b) im Zeitpunkt t_{I} einen Zündimpuls zu vermeiden, wird der Thyristor Th durch die Steuereinheit 2 gezündet, wenn das primärseitige Stromsignal I_{Ion} den vorgegebenen Endwert erreicht. Jedoch kann auf einen solchen Thyristor auch verzichtet werden, weshalb eine Zündung im Leertakt (Auspufftakt) erfolgt, die unschädlich ist. Die bei dieser Zündung auftretende Brennspannung ist in Figur 3b mit U_{F}, bezeichnet.

Bei Verwendung eines dreieckförmigen Verlaufs des primärseitigen Stromsignals I_{Ion} ist dessen Stromanstiegsgeschwindigkeit derart gewählt, daß sekundärseitig keine Zündung eingeleitet wird. Damit entfällt die Verwendung eines Thyristors.

Das Meßsignal des Ionenstromes wird sekundärseitig mittels einer Meßanordnung 4 ausgekoppelt und zur Auswertung einer Auswerteschaltung 3 zugeführt.

Das von dieser Auswerteschaltung 3 generierte Ionenstromsignal wird der Steuereinheit 2 zugeführt. Die Steuereinheit 2 gewinnt aus diesem Ionenstromsignal Informationen über den Verbrennungsvorgang sowie das Motorverhalten, so daß hieraus Regelgrößen zur Steuerung der Zündendstufe Z abgeleitet werden können.

Die Transistorzündung nach Figur 2 unterscheidet sich von derjenigen nach Figur 1 lediglich dadurch, daß als Zündspule ein Spartransformator Trₛ verwendet wird.

Da am primärseitigen Ende dieser Zündspule Trₛ keine Hochspannung auftritt, kann diese Seite , die über eine Entkoppel-Diode D mit der Betriebspannung U_{B} verbunden ist, direkt an die Auswerteschaltung 3 angeschlossen werden. Auch bei dieser Schaltungsanordnung kann die Regelschaltung 1 ein Gleichspannungsmeßsignal sowohl mit sägezahnförmigen als auch mit dreiecksförmigem Verlauf erzeugen.

Die Erzeugung eines Meßsignales für den Ionenstrom mittels eines sägezahn- oder dreiecksförmigen, primärseitigen Stromsignales kann nicht nur bei Transistorzündungen, wie sie in den Figuren 1 und 2 dargestellt sind, eingesetzt werden, sondern gleichfalls in Hochspannungs-Kondensator-Zündungen. Eine solche Hochspannungs-Kondensator-Zündung ist aus der DE-OS 24 55 536 bekannt.

Aus den der Steuereinheit 2 zugeführten Nutzsignalen können Informationen über den Verbrennungsvorgang und das Motorverhalten abgeleitet werden, um hieraus Regelgrößen zur Steuerung der Zündanlage abzuleiten und der Regelschaltung 1 zuzuführen.

So kann beispielsweise eine Klopfsignalauswertung durchgeführt werden, die zu einer Regelung des Zündzeitpunktes führt und keinen störgeräuschanfälligen Körperschallsensor erfordert. Weiterhin kann mit der Information über den Verbrennungsvorgang eine Zündenergiesteuerung durchgeführt werden, insbesondere der Zylinderdruck bestimmt werden, der mit in die Lambda-Regelung und Einspritzsteuerung eingeht. Weiterhin kann aus dem Nutzsignal eine Zylinder-1-Erkennung abgeleitet werden. Ferner lassen sich auch Zündaussetzer erkennen um damit Katalysatorschäden zu vermeiden. Schließlich kann eine Lasterkennung ebenfalls aus dem Nutzsignal abgeleitet werden, um hieraus eine zylinderselektive Laufruhenregelung und Zylinderfüllungsgleichverteilung durchzuführen.

## Patentansprüche

1. Schaltungsanordnung zur Ionenstrommessung im Verbrennungsraum einer Brennkraftmaschine, bestehend aus
a) einer Zündspule (Tr, Trₛ) mit Primär- und Sekundärkreis,
b) ein mit dem Primärkreis verbundener Zündtransistor (5),
gekennzeichnet durch folgende Merkmale:
c) es ist eine Regelschaltung (1) vorgesehen, die den Zündtransistor (5) zur Erzeugung eines sekundärseitigen quasi-stationären Ionenstrommeßsignales (U_{Ion}) derart ansteuert, daß im Anschluß an einen von der Regelschaltung (1) erzeugten Zündauslöseimpuls (U_{ZA)} eine Periode eines sägezahnförmigen Stromsignales (I_{ION}) als Primärstrom der Zündspule (Tr, Trₛ) erzeugt wird.

2. Schaltungsanordnung zur Ionenstrommessung im Verbrennungsraum einer Brennkraftmaschine, bestehend aus
a) einer Zündspule (Tr, Trₛ) mit Primär- und Sekundärkreis,
b) ein mit dem Primärkreis verbundener Zündtransistor (5),
gekennzeichnet durch folgende Merkmale:
c) es ist eine Regelschaltung (1) vorgesehen, die den Zündtransistor (5) zur Erzeugung eines sekundärseitigen quasi-stationären Ionenstrommeßsignales (U_{Ion}) derart ansteuert, daß im Anschluß an einen von der Regelschaltung (1) erzeugten Zündauslöseimpuls (U_{ZA}) eine Periode eines dreieckförmigen Stromsignals (I_{Ion}) als Primärstrom der Zündspule (Tr, Trₛ) erzeugt wird.

3. Schaltungsanordnung nach Anspruch 1 oder 2, dadurch gekennzeichnet, daß die Zündspule (Tr) mit einer Primärwicklung und einer Sekundärwicklung aufgebaut ist und daß das Meßsignal des Ionenstromes (U_{Ion}) mittels einer im Sekundärkreis der Zündspule (Tr) angeordneten Meßanordnung (4) abgegriffen wird.

4. Schaltungsanordnung nach Anspruch 1 oder 2, dadurch gekennzeichnet, daß die Zündspule (Trₛ) als Spartransformator ausgebildet ist und daß das Meßsignal des Ionenstromes (U_{Ion}) auf der Primärseite der Zündspule (Trₛ) abgegriffen wird.

## Claims

1. A circuit arrangement for measuring the ionic current in the combustion chamber of an internal combustion engine comprising
a) an ignition coil (Tr, Trₛ) with primary circuit and secondary circuit,
b) an ignition transistor (5) connected to the primary circuit
characterised by the following features:
c) a control circuit (1) is provided which controls the ignition transistor (5) for the generation of a secondary, quasi-stationary ionic current measuring signal (U_{Ion}) in such manner that, following an ignition triggering pulse (U_{ZA}) generated by the control circuit (1), one period of a sawtooth current signal (I_{ION}) is generated as primary current of the ignition coil (Tr, Trₛ).

2. A circuit arrangement for measuring the ionic current in the combustion chamber of an internal combustion engine comprising
a) an ignition coil (Tr, Trₛ) with primary circuit and secondary circuit,
b) an ignition transistor (5) connected to the primary circuit
characterised by the following features:
c) a control circuit (1) is provided which controls the ignition transistor (5) for the generation of a secondary, quasi-stationary ionic current measuring signal (U_{Ion}) in such manner that, following an ignition triggering pulse (U_{ZA}) generated by the control circuit (1), one period of a triangular current signal (I_{Ion}) is generated as primary current of the ignition coil (Tr, Trₛ).

3. A circuit arrangement according to Claim 1 or 2, characterised in that the ignition coil (Tr) is constructed with a primary winding and a secondary winding and that the ionic current measuring signal (U_{Ion}) is tapped by means of a measuring arrangement (4) arranged in the secondary circuit of the ignition coil (Tr).

4. A circuit arrangement according to Claim 1 or 2, characterised in that the ignition coil (Trₛ) has the form of an autotransformer and that the ionic current measuring signal (U_{Ion}) is tapped on the primary side of the ignition coil (Trₛ).

## Revendications

1. Circuit de mesure du courant ionique dans la chambre de combustion d'un moteur à combustion interne, se composant
a) d'une bobine d'allumage (Tr, Tr,) comportant un circuit primaire et un circuit secondaire ;
b) d'un transistor d'allumage (5) relié au circuit primaire,
caractérisé en ce que :
c) un circuit de régulation (1) est prévu, qui commande le transistor d'allumage (5) en vue de la génération d'un signal de mesure de courant ionique quasi-stationnaire côté secondaire (U_{Ion}) de telle sorte qu'à la suite d'une impulsion de déclenchement d'allumage (U_{ZA}) générée par le circuit de régulation (1) est générée une période d'un signal de courant en dents de scie (I_{Ion}) en tant que courant primaire de la bobine d'allumage (Tr, Trₛ).

2. Circuit de mesure du courant ionique dans la chambre de combustion d'un moteur à combustion interne se composant de
a) une bobine d'allumage (Tr, Trₛ) comportant un circuit primaire et un circuit secondaire,
b) un transistor d'allumage (5) relié au circuit primaire,
caractérisé en ce que
c) un circuit de régulation (1) est prévu qui commande le transistor d'allumage (5) en vue de la génération d'un signal de mesure de courant ionique quasi-stationnaire côté secondaire (U_{Ion}), de telle sorte qu'à la suite d'une impulsion de déclenchement d'allumage (U_{ZA}) générée par le circuit de régulation (1) est générée une période d'un signal de courant triangulaire (I_{Ion}) en tant que courant primaire de la bobine d'allumage (Tr, Trₛ).

3. Circuit selon la revendication 1 ou 2, caractérisé en ce que la bobine d'allumage (Tr) est réalisée avec un enroulement primaire et un enroulement secondaire et en ce que le signal de mesure du courant ionique (U_{Ion}) est prélevé au moyen d'un dispositif de mesure (4) disposé dans le circuit secondaire de la bobine d'allumage (Tr).

4. Circuit selon la revendication 1 ou 2, caractérisé en ce que la bobine d'allumage (Trₛ) est réalisée sous la forme d'un autotransformateur et en ce que le signal de mesure du courant ionique (U_{Ion}) est prélevé sur le côté primaire de la bobine d'allumage (Trₛ).
